# EUROPÄISCHE PATENTSCHRIFT

(11) **EP 3 227 578 B1**
(45) Veröffentlichungstag und Bekanntmachung des Hinweises auf die Patenterteilung: **18.09.2019**
(21) Anmeldenummer: 15787495.9
(22) Anmeldetag: 16.10.2015
(51) Int. Cl.: F16D 3/06, F16D 3/40

(54) **GELENKWELLE, INSBESONDERE KREUZGELENKWELLE**
JOINT SHAFT, IN PARTICULAR UNIVERSAL JOINT SHAFT
ARBRE DE TRANSMISSION, EN PARTICULIER ARBRE À CROISILLON

(30) Priorität: 03.12.2014 DE 102014224813
(43) Veröffentlichungstag der Anmeldung: 11.10.2017
(73) Patentinhaber: Voith Patent GmbH, 89522 Heidenheim (DE)
(72) Erfinder: GRAWENHOF, Peter, 89547 Dettingen (DE); HALUK, Erich, 89555 Steinheim (DE); CLEMENT, Roger, Lavalle, H7P 5J5 (CA)
(86) Internationale Anmeldenummer: PCT/EP2015/073970
(87) Internationale Veröffentlichungsnummer: WO 2016/087107

(56) Entgegenhaltungen:
- WO-A2-2009/012746
- JP-A- H06 255 498
- US-A- 2 409 662
- US-A- 4 125 000
- US-B1- 6 241 616

## Beschreibung

Die vorliegende Erfindung betrifft eine Gelenkwelle, insbesondere Kreuzgelenkwelle für Anwendungen, bei denen die Gelenkwelle in einem ersten Betriebszustand mit vergleichsweise kurzer axialer Länge zur Drehmoment- beziehungsweise Antriebsleistungsübertragung verwendet wird, und in einem zweiten Betriebszustand mit vergleichsweise größerer axialer Länge zur Drehmoment- beziehungsweise Antriebsleistungsübertragung verwendet wird. Das bedeutet, dass die Gelenkwelle sowohl im Zustand mit der kürzeren axialen Länge als auch im Zustand mit der längeren axialen Länge in der Lage sein muss, ein vorgegebenes Drehmoment (Nenndrehmoment), insbesondere ein identisches Drehmoment zu übertragen.

Gelenkwellen, welche für die vorstehend genannte Verwendung ausgelegt sind, weisen einen axialen Längenausgleich auf, auch als Teleskopfunktion bezeichnet. Solche Gelenkwellen kommen beispielsweise entsprechend einem Verwendungszweck der vorliegenden Erfindung in Walzwerken zum Antrieb von Arbeitswalzen mittels einer Antriebsmaschine zum Einsatz. Die bekannten Gelenkwellen mit Längenausgleich weisen ein Mittelteil zwischen zwei axialen Anschlussenden auf, wobei das Mittelteil ein erstes rohrförmiges Wellenelement mit einer Innenverzahnung und ein zweites stangenförmiges Wellenelement mit einer Außenverzahnung aufweist. Die Innenverzahnung und die Außenverzahnung stehen in einem Eingriff miteinander, um einerseits Drehmoment vom Innenteil auf das Außenteil oder umgekehrt zu übertragen. Ferner ermöglichen die im Eingriff miteinander stehenden Verzahnungen, dass das Innenteil (das zweite Wellenelement) aus dem Außenteil (dem ersten Wellenelement) ausgefahren wird, ohne dass der Eingriff der Verzahnungen verloren geht.

Zum druckschriftlichen Stand der Technik wird auf die US 4,125,000 und die US 6,241,616 verwiesen, deren bereits bekannte Merkmale im Oberbegriff von Anspruch 1 zusammengefasst sind. Zum weiteren druckschriftlichen Stand der Technik wird auf JP 2012-21594 A und US 8 419 555 B2 und die DE 20 2004 000 838 U1 verwiesen.

Wietehin ist die WO2009/012746 A2 zu nennen. Aus dieser Schrift ist eine Gelenkwelle mit einer Profilhülse mit Außenlaufbahnen und einem in dieser verschiebbaren Zapfen mit Innenlaufbahnen bekannt. In den Laufbahnen sind Kugeln zur Drehmomentübertragung vorgesehen. Innerhalb der Profilhülse ist eine Spiralfeder vorgesehen, durch Prfilhülse und Zapfen gegeneinander vorgespannt werden. Dabei ist der Zapfen in Richtung herausgeschobener Stellung gegenüber der Profilhülse vorgespannt.

Bei den Gelenkwellen mit axialem Längenausgleich der eingangs genannten Art ist nachteilig, dass diese eine erhebliche axiale Länge aufweisen, welche für einen häufig erforderten geringen axialen Bauraum in Walzwerken nicht geeignet ist. Die Länge ist dadurch bedingt, dass auch im ausgefahrenen Zustand des zweiten Wellenelementes aus dem ersten Wellenelement eine ausreichende axiale Überdeckung beider Wellenelemente erforderlich ist, um das geforderte Drehmoment beziehungsweise die geforderte Antriebsleistung sicher über den axialen Abstützbereich beider Verzahnungen aneinander zu übertragen. Ein zu kurzer axialer Abstützbereich zwischen den Verzahnungen würde unzulässig hohe Kräfte beziehungsweise Flächenpressungen erzeugen, die zu einem frühzeitigen Verschleiß oder einer Zerstörung der Verzahnung beziehungsweise der die Verzahnungen tragenden Wellenelemente führen könnten.

Der vorliegenden Erfindung liegt die Aufgabe zugrunde, eine Gelenkwelle, insbesondere Kreuzgelenkwelle, mit axialem Längenausgleich anzugeben, die trotz möglicher großer axialer Erstreckung eine kurze minimale axiale Länge aufweist, um auch in kleinen axialen Bauräumen, insbesondere im Antriebsstrang von Walzwerken, verwendet werden zu können.

Die erfindungsgemäße Aufgabe wird durch eine Gelenkwelle mit den Merkmalen von Anspruch 1 gelöst. In den abhängigen Ansprüchen sind vorteilhafte und besonders zweckmäßige Ausgestaltungen der Erfindung angegeben.

Eine erfindungsgemäße Gelenkwelle, die insbesondere als Kreuzgelenkwelle ausgeführt ist, weist ein erstes axiales Anschlussende und ein zweites, dem ersten axialen Anschlussende entgegengesetztes Anschlussende auf. Zwischen den beiden axialen Anschlussenden ist ein Mittelteil vorgesehen, welches das erste Anschlussende über wenigstens ein Drehgelenk mit dem zweiten Anschlussende verbindet. Insbesondere ist zwischen dem Mittelteil und dem ersten Anschlussende ein erstes Drehgelenk vorgesehen und zwischen dem Mittelteil und dem zweiten Anschlussende ist ein zweites Drehgelenk vorgesehen.

Die beiden Drehgelenke ermöglichen, dass das entsprechende Anschlussende gelenkig am Mittelteil angeschlossen ist und zugleich eine drehstarre Verbindung zwischen dem Mittelteil und dem Anschlussende besteht. Das Drehgelenk oder die Drehgelenke ist/sind insbesondere als Kreuzgelenk ausgeführt.

Das Mittelteil ist mit einem Längenausgleich über einer Längsachse der Gelenkwelle versehen, das bedeutet, dass das Mittelteil auseinander- und zusammenfahrbar ist, um die axiale Länge des Mittelteils und damit den axialen Abstand des ersten Anschlussendes vom zweiten Anschlussende zu variieren. Wie eingangs dargelegt wurde, ist der Längenausgleich dabei vorteilhaft derart gestaltet, dass er in jedem mehr oder minder ausgefahrenen Zustand eine Drehmomentübertragung mittels der Gelenkwelle ermöglicht, wobei insbesondere das maximal übertragbare Drehmoment beziehungsweise die maximal übertragbare Antriebsleistung in jedem Zustand zumindest im Wesentlichen identisch ist.

Anstelle zu dem Mittelteil kann auch ein Endteil der Gelenkwelle, insbesondere Kreuzgelenkwelle, mit dem erfindungsgemäßen Längenausgleich versehen sein. Das Endteil ist zwischen dem Mittelteil und einem der beiden Anschlussenden der Gelenkwelle oder in Verlängerung zum Mittelteil positioniert, vorteilhaft zwischen dem entsprechenden Drehgelenk und dem zugeordneten Anschlussende. Somit kann das Endteil durch das Drehgelenk vom Mittelteil getrennt sein und das Anschlussende an seinem freien axialen Ende aufweisen. Das Anschlussende kann das erste Anschlussende des Endteils ausgehend vom Mittelteil sein. Bei einem mehrteiligen Endteil hingegen, kann das Anschlussende einem oder mehreren vorgeschalteten Anschlüssen ausgehend vom Mittelteil folgen.

Erfindungsgemäß wird der Längenausgleich des Mittelteils oder des Endteils durch ein rohrförmiges erstes Wellenelement, das wenigstens eine Innenverzahnung mit sich in Richtung der Längsachse erstreckenden umfangsverteilten inneren Zähnen aufweist, und ein rohrförmiges oder stangenförmiges zweites Wellenelement, das wenigstens eine Außenverzahnung mit sich in Richtung der Längsachse erstreckenden umfangsverteilten äußeren Zähnen aufweist, gebildet. Das erste Wellenelement ist an dem ersten Anschlussende angeschlossen, insbesondere über ein erstes Drehgelenk. Das zweite Mittelteil, insbesondere über ein erstes Drehgelenk und das Mittelteil und gemäß einer Ausführungsform über das erste Drehgelenk, das Mittelteil und das zweite Drehgelenk.

Erfindungsgemäß ist nun zwischen dem ersten Wellenelement und dem zweiten Wellenelement wenigstens eine Zwischenhülse vorgesehen, die wenigstens eine Zwischenhülseninnenverzahnung mit sich in Richtung der Längsachse erstreckenden umfangsverteilten inneren Zähnen und wenigstens eine Zwischenhülsenaußenverzahnung mit sich in Richtung der Längsachse erstreckenden umfangsverteilten äußeren Zähnen aufweist und in Richtung der Längsachse sowohl gegenüber dem ersten Wellenelement als auch gegenüber dem zweiten Wellenelement verschiebbar ist und dabei über die Zwischenhülsenaußenverzahnung am ersten Wellenelement und über die Zwischenhülseninnenverzahnung am zweiten Wellenelement unmittelbar oder mittelbar angeschlossen ist.

Wenn genau eine Zwischenhülse vorgesehen ist, so befindet sich die Zwischenhülsenaußenverzahnung mit der Innenverzahnung des ersten Wellenelementes im Zahneingriff und die Zwischenhülseninnenverzahnung befindet sich mit der Außenverzahnung des zweiten Wellenelementes im Zahneingriff. Wenn mehrere radial ineinander gestaffelte Zwischenhülsen vorgesehen sind, befindet sich entsprechend die Zwischenhülsenaußenverzahnung der radial äußersten Zwischenhülse mit der Innenverzahnung des ersten Wellenelementes im Zahneingriff und die Zwischenhülseninnenverzahnung der radial innersten Zwischenhülse befindet sich mit der Außenverzahnung des zweiten Wellenelementes im Zahneingriff und die Zwischenhülseninnenverzahnung jeweils einer ersten Zwischenhülse, die auf einer zweiten Zwischenhülse radial außen gleitet, befindet sich mit der Zwischenhülsenaußenverzahnung der jeweils zweiten Zwischenhülse im Zahneingriff.

Gemäß der Erfindung sind im Mittelteil oder bei Gestalten des Endteils mit dem Längenausgleich in dem Endteil eine Vielzahl von axialen Anschlägen vorgesehen, die ein axiales Ausfahren des zweiten Wellenelementes aus der wenigstens einen Zwischenhülse beziehungsweise bei mehreren Zwischenhülsen aus der radial innersten Zwischenhülse und ein axiales Ausfahren der wenigstens einen Zwischenhülse, bei mehreren Zwischenhülsen der radial äußersten Zwischenhülse aus dem ersten Wellenelement begrenzen. Wenn mehrere Zwischenhülsen vorgesehen sind, können entsprechend ein oder mehrere axiale Anschläge vorgesehen sein, die ein Ausfahren einer jeweils inneren Zwischenhülse aus einer jeweils äußeren Zwischenhülse begrenzen.

Durch die axialen Anschläge wird eine ausreichende axiale Länge des Ineinandergreifens der Verzahnungen sichergestellt.

Erfindungsgemäß ist ein erster axialer Anschlag vorgesehen, der eine erste Anlagefläche an dem ersten Wellenelement und eine zweite Anlagefläche an der Zwischenhülse oder bei Vorsehen mehrerer Zwischenhülsen an der äußersten Zwischenhülse umfasst, wobei die erste und die zweite Anlagefläche in Axialrichtung stirnseitig entgegengesetzt zueinander positioniert sind.

Erfindungsgemäß ist ein zweiter axialer Anschlag vorgesehen, der eine erste Anlagefläche an der Zwischenhülse oder bei Vorsehen mehrerer Zwischenhülsen an der innersten Zwischenhülse sowie eine zweite Anlagefläche an dem zweiten Wellenelement umfasst, wobei die erste und die zweite Anlagefläche in Axialrichtung stirnseitig entgegengesetzt zueinander positioniert sind.

Die ersten und die zweiten Anlageflächen weisen vorteilhaft jeweils eine Ringform auf.

Erfindungsgemäß ist wenigstens eine der genannten zweiten Anlageflächen, durch eine stirnseitig an dem zweiten Wellenelement oder der Zwischenhülse angeschraubten Ringscheibe gebildet und auf der der Stirnseite des zweiten Wellenelementes beziehungsweise der Zwischenhülse zugewandten Seite der Ringscheibe positioniert. Gemäß einer Ausführungsform sind mehrere oder alle zweiten Anlageflächen durch jeweils eine stirnseitig an dem zweiten Wellenelement oder der Zwischenhülse angeschraubten Ringscheibe auf der der Stirnseite zugewandten Seite der Ringscheibe gebildet.

Wenigstens eine der genannten ersten Anlageflächen, mehrere erste Anlageflächen oder alle ersten Anlageflächen können durch einen radial nach innen vorstehenden Bund auf der Zwischenhülse oder dem ersten Wellenelement gebildet sein, das heißt entsprechend durch einen ersten Bund auf der Zwischenhülse und einem zweiten Bund auf dem Wellenelement beziehungsweise bei mehreren Zwischenhülsen durch entsprechende Bünde, insbesondere je Zwischenhülse einen Bund.

der Zwischenhülse oder dem ersten Wellenelement gebildet sein, das heißt entsprechend durch einen ersten Bund auf der Zwischenhülse und einem zweiten Bund auf dem Wellenelement beziehungsweise bei mehreren Zwischenhülsen durch entsprechende Bünde, insbesondere je Zwischenhülse einen Bund.

Besonders günstig ist es, wenn die axialen Anschläge derart positioniert sind, dass ein Ausfahren des zweiten Wellenelementes aus der dieses unmittelbar umschließenden Zwischenhülse, das heißt der radial inneren Zwischenhülse, welche jedoch die einzige Zwischenhülse sein kann, und der unmittelbar vom ersten Wellenelement umschlossenen Zwischenhülse, das heißt der radial äußeren Zwischenhülse, insbesondere der einzigen Zwischenhülse, aus dem ersten Wellenelement auf die Hälfte seiner/ihrer axialen Länge oder weniger begrenzt ist. Die axiale Länge bezieht sich dabei auf das jeweils ausfahrende Bauteil.

Günstig ist, wenn im Mittelteil und/oder im Endteil ein Mitnahmeanschlag vorgesehen ist, der beim Einfahren des zweiten Wellenelementes stirnseitig an der Zwischenhülse anschlägt, um diese mitzunehmen. Dadurch wird ein definiertes Einfahren und damit eine definierte Position der einfahrenden beziehungsweise vollständig eingefahrenen Zwischenhülse erreicht. Der Mitnahmeausschlag stellt insbesondere zugleich einen Stoppanschlag dar, der verhindert, dass die Zwischenhülse zu weit auf das zweite Wellenelement aufgeschoben wird und verklemmt.

Im Mittelteil oder im Endteil kann ein Stoppanschlag vorgesehen sein, an dem die Zwischenhülse beim Einfahren in das erste Wellenelement stirnseitig anschlägt. Dieser Stoppanschlag verhindert, dass die Zwischenhülse zu weit in das erste Wellenelement eingeschoben wird.

Gemäß einer vorteilhaften Ausführungsform der Erfindung sind radiale Führungen vorgesehen, welche die Zwischenhülse an ihrem ausfahrenden Ende und das zweite Wellenelement im Bereich ihres inneren Endes in der Zwischenhülse radial führen. Wenn mehrere Zwischenhülsen vorgesehen sind, können entsprechende radiale Führungen an der jeweils inneren Zwischenhülse vorgesehen sein, an deren inneren Ende, um die aus- und einfahrende innere Zwischenhülse in der umschließenden Zwischenhülse zu führen. Zwischenhülse und/oder die erste Anlagefläche an dem ersten Wellenelement bildendes Bauteil, insbesondere der Bund, zugleich eine radiale Führung aus. Eine solche radiale Führung kann zugleich zur Zentrierung der aneinander gleitenden Elemente relativ zueinander dienen.

Insbesondere, wenn an einem axialen Anschlussende der Gelenkwelle eine Verbindungsnabe zum Aufschieben auf einen Zapfen, insbesondere Flachzapfen, vorgesehen ist, können das erste Wellenelement und das zweite Wellenelement über einen Federspeicher, insbesondere eine Druckfeder, im Sinne eines Auseinanderfahrens gegeneinander vorgespannt, insbesondere druckvorgespannt sein.

Kontaktstellen zwischen dem ersten Wellenelement, der oder den Zwischenhülsen und dem zweiten Wellenelement, insbesondere eine oder mehrere oder alle der genannten Anlageflächen und/oder Anschläge können mit verschleißarmen Beschichtungen versehen sein oder gehärtet, insbesondere randschichtgehärtet sein, um einen möglichen Verschleiß zu reduzieren. Insbesondere kommt eine Rilsan®-Beschichtung oder eine Beschichtung durch Nitrieren und/oder eine Randschichthärtung durch Einsatzhärten oder Induktivhärten in Betracht. Ferner können auch Gleitlagermaterialien zum Beispiel aus Polyamid, PEEK oder Bronze an den entsprechenden Stellen vorgesehen sein. Entsprechende Maßnahmen können auch an den radialen Führungen und/oder Zentrierungen vorgesehen sein.

Die Erfindung soll nachfolgend anhand von Ausführungsbeispielen und den Figuren exemplarisch beschrieben werden.

Es zeigen:
- Figur 1: eine Gelenkwelle gemäß einem ersten Ausführungsbeispiel der Erfindung im maximal zusammengeschobenen Zustand;
- Figur 2: die Gelenkwelle aus der Figur 1 im maximal ausgefahrenen Zustand;
- Figur 3: eine Ausführungsform gemäß der Figur 2 jedoch mit abgewandeltem Stoppanschlag der Zwischenhülse;
- Figur 4: ein Ausführungsbeispiel entsprechend der Figur 3 mit Federspeicher;
- Figur 5: eine Ausführungsform ähnlich zu den Figuren 1 und 4, jedoch mit einer verkürzten Verzahnung und zusätzlichen radialen Zentrierringen;
- Figur 6: ein Ausführungsbeispiel, bei welchem der Längenausgleich in einem Endteil der Gelenkwelle ausgeführt ist.

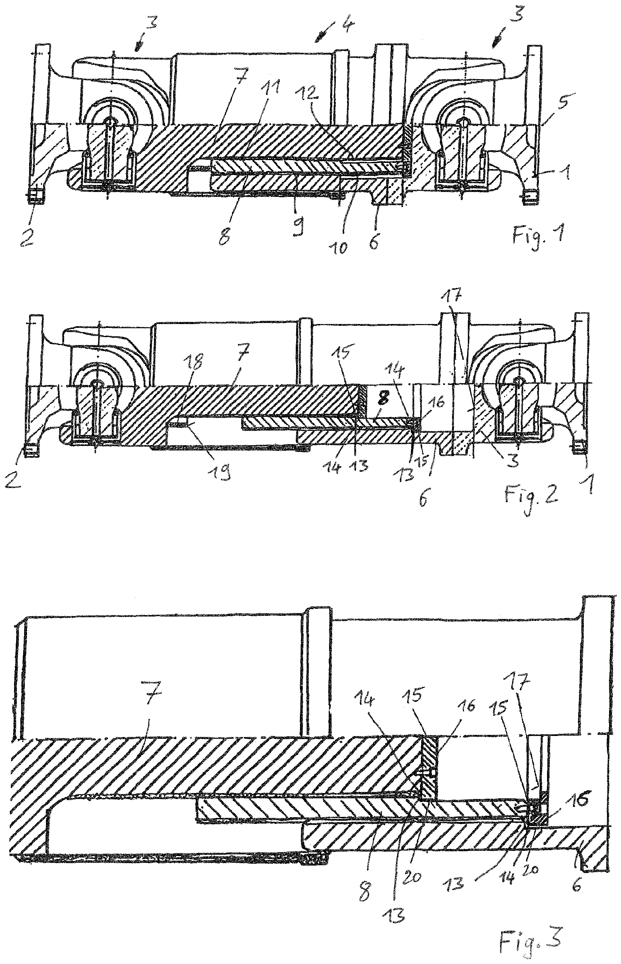

In der Figur 1 erkennt man eine Gelenkwelle mit einem ersten axialen Anschlussende 1 und einem zweiten axialen Anschlussende, die jeweils über ein Drehgelenk 3, hier Kreuzgelenk, mit einem Mittelteil 4 gelenkig, jedoch drehstarr verbunden sind. Jedes Drehgelenk 3 weist ein Zapfenkreuz und entsprechend zwei Gelenkgabeln auf, die das Zapfenkreuz aufnehmen. Jedoch könnten die Drehgelenke 3 auch anders gestaltet sein oder ein Drehgelenk könnte eingespart werden.

Das Mittelteil 4 weist einen Längenausgleich über der Längsachse 5 der Gelenkwelle auf, wobei die Längsachse 5 mit der Rotationsachse gleichzusetzen ist. Hierzu umfasst das Mittelteil 4 ein rohrförmiges erstes Wellenelement 6 und ein stangeförmiges zweites Wellenelement 7. Ferner ist zwischen dem ersten Wellenelement 6 und dem zweiten Wellenelement 7 eine Zwischenhülse 8 vorgesehen, die das zweite Wellenelement 7 über einen Teil dessen axialen Länge über dem Umfang umschließt und von einem Teil der axialen Länge des ersten Wellenelementes 6 über dem Umfang umschlossen wird. In den Darstellungen sind die entsprechenden Wellenelemente 6, 7 und die Zwischenhülse unterhalb der Längsachse 5 in einem Axialschnitt schraffiert dargestellt, wohingegen man oberhalb der Längsachse 5 nur das erste Wellenelement 6 von außen in einer Draufsicht erkennt.

In dem gezeigten Ausführungsbeispiel ist das Mittelteil 4 über einen Axialflansch an der Gelenkgabel des Drehgelenks 3, das mit dem ersten axialen Anschlussende 1 verbunden ist, angeschlossen. Dies ist jedoch nicht zwingend.

Das erste Wellenelement 6 weist eine Innenverzahnung 9 mit über dem Umfang verteilten inneren Zähnen auf, die sich mit den Zähnen einer Zwischenhülsenaußenverzahnung 10 im Eingriff befindet, um einerseits eine axiale Verschiebung des ersten Wellenelementes 6 gegenüber der Zwischenhülse 8 zu ermöglichen und andererseits eine Drehmomentübertragung zwischen der Zwischenhülse 8 und dem ersten Wellenelement 6 zu gewährleisten, und zwar unvermindert in jeglichem mehr oder minder ausgezogenen Zustand.

Die Zwischenhülse 8 weist eine Zwischenhülseninnenverzahnung 11 auf, die entsprechend über dem Umfang verteilte innere Zähne aufweist, die sich mit über dem Umfang verteilten äußeren Zähnen einer Außenverzahnung 12 auf dem zweiten Wellenelement 7 in Eingriff befinden. Bezüglich des Zusammenwirkens der Zwischenhülseninnenverzahnung 11 und der Außenverzahnung 12 gilt das zuvor zur Zwischenhülsenaußenverzahnung 10 und der Innenverzahnung 9 gesagte.

Mit Bezug auf die Figur 2 werden nun die axialen Anschläge beschrieben, welche die maximalen axialen Ausfahrlängen der Zwischenhülse 8 aus dem ersten Wellenelement 6 und des zweiten Wellenelementes 7 aus der Zwischenhülse 8 festlegen. Diese axialen Anschläge sind jedoch auch bereits in der Figur 1 gezeigt, jedoch der Übersichtlichkeit halber nicht beziffert.

Ein erster axialer Anschlag weist eine erste Anlagefläche 13 an dem ersten Wellenelement 6 und eine zweite Anlagefläche 14 an der Zwischenhülse 8 auf. Dies ist auch in der Figur 3 nochmals deutlich erkennbar. Wenn die erste Anlagefläche 13 an der zweiten Anlagefläche 14 stirnseitig anstößt, kann die Zwischenhülse 8 nicht weiter in Axialrichtung aus dem ersten Wellenelement 6 ausgefahren werden.

Im gezeigten Ausführungsbeispiel wird die erste Anlagefläche 13 durch einen radial innen vorstehenden Bund auf dem erstem Wellenelement 6 gebildet und die zweite Anlagefläche 14 wird durch einen radial nach außen vorstehenden Bund auf der Zwischenhülse 8 gebildet, wobei dieser Bund durch eine stirnseitig auf die Zwischenhülse 8 aufgeschraubte Ringscheibe 15 zur Verfügung gestellt wird. Wie man aus den Figuren 1 und 2 erkennen kann, bildet die Ringscheibe 15 auf ihrer entgegengesetzten Stirnseite eine Stoppanlagefläche 16 zusammenwirkend mit einer weiteren Stoppanlagefläche 17 im ersten Wellenelement 6, die gemeinsam das Einfahren der Zwischenhülse 8 in das erste Wellenelement 6 begrenzen.

Entsprechend ist in der Zwischenhülse 8 eine erste Anlagefläche 13 in Form eines radial nach innen vorstehenden Bundes vorgesehen, die mit einer zweiten Anlagefläche 14 in Form eines radial nach außen vorstehenden Bundes auf dem zweiten Wellenelement 7 zusammenarbeitet. Auch die zweite Anlagefläche 14 wird hier entsprechend durch eine Ringscheibe 15 gebildet, die stirnseitig auf das zweite Wellenelement 7 aufgeschraubt ist und auf ihrer Rückseite eine erste Stoppanlagefläche 16 bildet, die mit einer zweiten Stoppanlagefläche zusammenarbeitet, um das Einfahren des zweiten Wellenelementes 7 in die Zwischenhülse 8 und das erste Wellenelement 6 zu begrenzen. Bei dem Ausführungsbeispiel gemäß der Figur 2 wird die zweite Stoppanlagefläche 17 im ersten Wellenelement 6 auch zum Anschlagen der ersten Stoppanlagefläche 16 des ersten Wellenelementes 6 verwendet, wohingegen gemäß der Figur 3 die zweite Stoppanlagefläche 17 durch die Ringscheibe 15 auf der Zwischenhülse 8 gebildet wird.

Zugleich ist bei dem Ausführungsbeispiel gemäß der Figur 2 ein Anschlag 18 in Form eines Ringes außen auf dem zweiten Wellenelement 7 vorgesehen, der eine Stoppanlagefläche 19 für die Zwischenhülse 8 bildet, damit diese nicht zu weit auf das zweite Wellenelement 7 aufgeschoben wird beziehungsweise das zweite Wellenelement 7 nicht zu weit in die Zwischenhülse 8 eingefahren wird. Zugleich nimmt dieser Anschlag 18 die Zwischenhülse 8 mit, wenn das zweite Wellenelement 7 in das erste Wellenelement 6 einfährt.

Das zweite Wellenelement 7 schlägt mit seiner Stoppanlagefläche 16 an der Stoppanlagefläche 17 des ersten Wellenelementes 6 an. Beim Ausführungsbeispiel gemäß der Figur 3 kann dieser Anschlag 18 außen auf dem zweiten Wellenelement 7 eingespart werden.

Im gezeigten Ausführungsbeispiel dienen die axialen Anschläge beziehungsweise die Ringscheiben 15 auch als radiale Führungen 20, um die Zentrierung der Verzahnungen zu verbessern und um die Stützlänge der Verzahnungen zu verlängern.

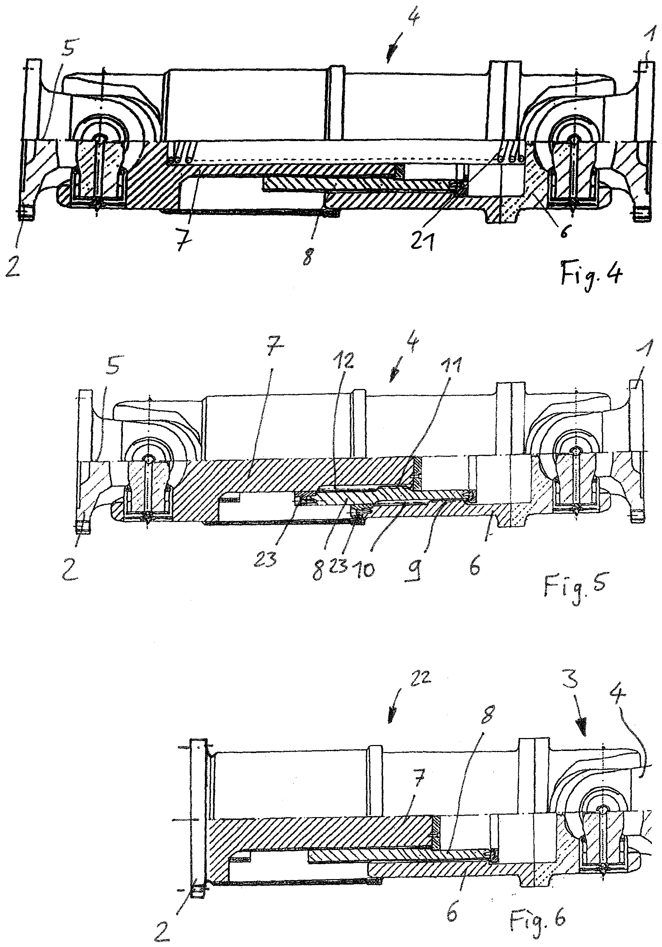

Das Ausführungsbeispiel gemäß der Figur 4 entspricht weitgehend jenem der Figur 3, jedoch ist hier eine Druckfeder 21 vorgesehen, welche das erste Wellenelement 6 und das zweite Wellenelement 7 in Axialrichtung im Sinne eines Auseinanderfahrens druckbeaufschlagt. Hierdurch kann verhindert werden, dass ein axiales Anschlussende der Gelenkwelle von einem Zapfen rutscht, auf welches dieses aufgeschoben ist. Natürlich könnte in einer hier nicht dargestellten Ausführungsform auch das axiale Anschlussende einen Zapfen aufweisen, wodurch die Druckfeder 21 dann verhindert, dass dieser Zapfen aus einer entsprechenden zugeordneten Nabe rutscht.

Beim Ausführungsbeispiel gemäß der Figur 5 sind die Innenverzahnung 9 und die Zwischenhülseninnenverzahnung 11 vergleichsweise kürzer ausgeführt. Die Zwischenhülseninnenverzahnung 11 weist daher einen axialen Abstand zu beiden axialen Enden der Zwischenhülse 8 auf und die Innenverzahnung 9 weist einen axialen Abstand zum freien Ende des ersten Wellenelementes 6, also dem dem zweiten Wellenelement 7 zugewandten Ende auf. Zusätzlich ist an dem freien axialen Ende des ersten Wellenelementes 6 ein Zentrierring 23 vorgesehen, ebenso wie am entsprechenden dem zweiten Wellenelement 7 zugewandten axialen Ende der Zwischenhülse 8.

Eine solche Gestaltung gemäß der Figur 5 mit kurzem Verzahnungspaket und zusätzlichem Zentrierring 23 ist für Anwendungsfälle geeignet, bei denen die vergleichsweise kurze sich im Eingriff befindende Verzahnung zur Drehmomentübertragung ausreichend ist und die lange Profilüberdeckung der Wellenelemente 6, 7 sowie der Zwischenhülse 8 nur benötigt wird, um das Durchknicken der Gelenkwelle zu verhindern. Im Einzelnen wird dieses Durchknicken durch das durch die Zentrierringe 23 gebildete Gleitlager an den axialen Enden verhindert.

Anhand der Figur 6 wird verdeutlicht, dass der Längenausgleich auch in einem Endteil 22, das heißt zwischen einem axialen Anschlussende, hier dem zweiten axialen Anschlussende 2 und dem Mittelteil 4, insbesondere zwischen dem axialen Anschlussende, hier dem zweiten axialen Anschlussende 2 und dem diesem zugewandten Drehgelenk 3 ausgeführt sein kann. Zu den weiteren Einzelheiten wird auf die vorhergehende Beschreibung verwiesen.

## Patentansprüche

1. Gelenkwelle, insbesondere Kreuzgelenkwelle,
1.1 mit einem ersten axialen Anschlussende (1) und einem zweiten axialen Anschlussende (2);
1.2 mit einem Mittelteil (4), welches das erste Anschlussende (1) über wenigstens ein Drehgelenk (3) oder wenigstens ein Drehgelenk (3) je Anschlussende (1, 2) mit dem zweiten Anschlussende (2) drehstarr und gelenkig verbindet;
1.3 wobei das Mittelteil (4) und/oder ein Endteil (22) zwischen dem Mittelteil (4) und einem der beiden Anschlussenden (1, 2) mit einem Längenausgleich über einer Längsachse (5) der Gelenkwelle versehen ist, umfassend ein rohrförmiges erstes Wellenelement (6), das wenigstens eine Innenverzahnung (9) mit sich in Richtung der Längsachse (5) erstreckenden umfangsverteilten inneren Zähnen aufweist und zumindest mittelbar an dem ersten Anschlussende (1) angeschlossen ist, und ein rohrförmiges oder stangenförmiges zweites Wellenelement (7), das wenigstens eine Außenverzahnung (12) mit sich in Richtung der Längsachse (5) erstreckenden umfangsverteilten äußeren Zähnen aufweist und zumindest mittelbar an dem zweiten Anschlussende (2) angeschlossen ist; wobei
1.4 zwischen dem ersten Wellenelement (6) und dem zweiten Wellenelement (7) wenigstens eine Zwischenhülse (8) vorgesehen ist, die wenigstens eine Zwischenhülseninnenverzahnung (10) mit sich in Richtung der Längsachse (5) erstreckenden umfangsverteilten inneren Zähnen und wenigstens eine Zwischenhülsenaußenverzahnung (11) mit sich in Richtung der Längsachse (5) erstreckenden umfangsverteilten äußeren Zähnen aufweist und in Richtung der Längsachse (5) gegenüber dem ersten Wellenelement (6) und dem zweiten Wellenelement (7) verschiebbar ist und drehstarr über die Zwischenhülsenaußenverzahnung (10) am ersten Wellenelement (6) und über die Zwischenhülseninnenverzahnung (11) am zweiten Wellenelement (7) unmittelbar oder mittelbar angeschlossen ist,
1.5 wobei im Mittelteil (4) oder dem Endteil (22) eine Vielzahl von axialen Anschlägen vorgesehen ist, die ein axiales Ausfahren des zweiten Wellenelementes (7) aus der wenigstens einen Zwischenhülse (8) und ein axiales Ausfahren der wenigstens einen Zwischenhülse (8) aus dem ersten Wellenelement (6) begrenzen,
1.6 ein erster axialer Anschlag eine erste Anlagefläche (13) an dem ersten Wellenelement (6) und eine zweite Anlagefläche (14) an der Zwischenhülse (8) umfasst, wobei die erste und die zweite Anlagefläche (13, 14) in Richtung der Längsachse (5) stirnseitig entgegengesetzt zueinander positioniert sind, und ein zweiter axialer Anschlag eine erste Anlagefläche (13) an der Zwischenhülse (8) sowie eine zweite Anlagefläche (14) an dem zweiten Wellenelement (7) umfasst, wobei die erste und die zweite Anlagefläche (13, 14) in Richtung der Längsachse (5) stirnseitig entgegengesetzt zueinander positioniert sind, **dadurch gekennzeichnet, dass**
1.7 wenigstens eine zweite Anlagefläche (14) durch eine stirnseitig an dem zweiten Wellenelement (7) oder der Zwischenhülse (8) angeschraubten Ringscheibe (15) auf der der Stirnseite zugewandten Seite der Ringscheibe (15) gebildet sind.

2. Gelenkwelle gemäß Anspruch 1, **dadurch gekennzeichnet, dass** mehrere oder alle zweiten Anlageflächen (14) durch jeweils eine stirnseitig an dem zweiten Wellenelement (7) oder der Zwischenhülse (8) angeschraubten Ringscheibe (15) auf der der Stirnseite zugewandten Seite der Ringscheibe (15) gebildet sind.

3. Gelenkwelle nach Anspruch 1 oder 2, **dadurch gekennzeichnet, dass** ein erster axialer Anschlag eine erste Anlagefläche (13) an dem ersten Wellenelement (6) und eine zweite Anlagefläche (14) bei Vorsehen mehrerer Zwischenhülsen (8) an der äußersten Zwischenhülse (8) umfasst, wobei die erste und die zweite Anlagefläche (13, 14) in Richtung der Längsachse (5) stirnseitig entgegengesetzt zueinander positioniert sind, und ein zweiter axialer Anschlag bei Vorsehen mehrerer Zwischenhülsen (8) an der innersten Zwischenhülse (8) sowie eine zweite Anlagefläche (14) an dem zweiten Wellenelement (7) umfasst, wobei die erste und die zweite Anlagefläche (13, 14) in Richtung der Längsachse (5) stirnseitig entgegengesetzt zueinander positioniert sind.

4. Gelenkwelle gemäß Anspruch1, **dadurch gekennzeichnet, dass** die ersten und zweiten Anlageflächen (13, 14) jeweils eine Ringform aufweisen.

5. Gelenkwelle gemäß einem der Ansprüche 1 bis 4, **dadurch gekennzeichnet, dass** mehrere oder alle zweiten Anlageflächen (14) durch jeweils eine stirnseitig an dem zweiten Wellenelement (7) oder der Zwischenhülse (8) angeschraubten Ringscheibe (15) auf der der Stirnseite zugewandten Seite der Ringscheibe (15) gebildet sind.

6. Gelenkwelle gemäß einem der Ansprüche 1 bis 5, **dadurch gekennzeichnet, dass** wenigstens eine erste Anlagefläche (13), mehrere oder alle ersten Anlageflächen (13) durch einen radial nach innen vorstehenden Bund auf der Zwischenhülse (8) oder dem ersten Wellenelement (6) gebildet sind.

7. Gelenkwelle gemäß einem der Ansprüche 1 bis 6, **dadurch gekennzeichnet, dass** die axialen Anschläge derart positioniert sind, dass ein Ausfahren des zweiten Wellenelementes (7) aus der dieses unmittelbar umschließenden Zwischenhülse (8) und der unmittelbar vom ersten Wellenelement (6) umschlossenen Zwischenhülse (8) aus dem ersten Wellenelement (6) auf maximal die Hälfte seiner/ihrer axialen Länge oder weniger begrenzt ist.

8. Gelenkwelle gemäß einem der Ansprüche 1 bis 7, **dadurch gekennzeichnet, dass** im Mittelteil (4) oder dem Endteil (22) ein Anschlag (18) vorgesehen ist, der beim Einfahren des zweiten Wellenelementes (7) stirnseitig an der Zwischenhülse (8) anschlägt, um diese mitzunehmen.

9. Gelenkwelle gemäß einem der Ansprüche 1 bis 8, **dadurch gekennzeichnet, dass** im Mittelteil (4) oder dem Endteil (22) ein Stoppanschlag vorgesehen ist, an dem die Zwischenhülse (8) beim Einfahren in das erste Wellenelement (6) stirnseitig anschlägt.

10. Gelenkwelle gemäß einem der Ansprüche 1 bis 9, **dadurch gekennzeichnet, dass** ein die zweite Anlagefläche (14) an dem zweiten Wellenelement (7) und ein die zweite Anlagefläche (14) an der Zwischenhülse (8) die Ringscheibe (15), und ein die erste Anlagefläche (13) an der Zwischenhülse (8) und die erste Anlagefläche (13) an dem ersten Wellenelement (6) bildender Bund, zugleich eine radiale Führung (20) und/oder Zentrierung ausbilden.

## Claims

1. Joint shaft, in particular universal joint shaft,
1.1 having a first axial connector end (1) and a second axial connector end (2);
1.2 having a centre part (4) which connects the first connector end (1) via at least one rotary joint (3) or at least one rotary joint (3) per connector end (1, 2) to the second connector end (2) in an articulated manner and fixedly so as to rotate with it;
1.3 the centre part (4) and/or an end part (22) between the centre part (4) and one of the two connector ends (1, 2) being provided with a length compensation means over a longitudinal axis (5) of the joint shaft, comprising a tubular first shaft element (6) which has at least one internal toothing system (9) with circumferentially distributed internal teeth which extend in the direction of the longitudinal axis (5) and is connected at least indirectly at the first connector end (1), and a tubular or rod-shaped second shaft element (7) which has at least one external toothing system (12) with circumferentially distributed external teeth which extend in the direction of the longitudinal axis (5) and is connected at least indirectly at the second connector end (2);
1.4 at least one intermediate sleeve (8) being provided between the first shaft element (6) and the second shaft element (7), which intermediate sleeve (8) has at least one intermediate sleeve internal toothing system (10) with circumferentially distributed internal teeth which extend in the direction of the longitudinal axis (5), and at least one intermediate sleeve external toothing system (11) with circumferentially distributed external teeth which extend in the direction of the longitudinal axis (5), and can be displaced in the direction of the longitudinal axis (5) with respect to the first shaft element (6) and the second shaft element (7), and is connected directly or indirectly via the intermediate sleeve external toothing system (10) to the first shaft element (6) and via the intermediate sleeve internal toothing system (11) to the second shaft element (7), in each case fixedly so as to rotate with it,
1.5 a multiplicity of axial stops being provided in the centre part (4) or the end part (22), which axial stops limit an axial extension of the second shaft element (7) out of the at least one intermediate sleeve (8) and an axial extension of the at least one intermediate sleeve (8) out of the first shaft element (6),
1.6 a first axial stop comprising a first bearing face (13) on the first shaft element (6) and a second bearing face (14) on the intermediate sleeve (8), the first and the second bearing face (13, 14) being positioned opposite one another on the end side in the direction of the longitudinal axis (5), and a second axial stop comprising a first bearing face (13) on the intermediate sleeve (8) and a second bearing face (14) on the second shaft element (7), the first and the second bearing face (13, 14) being positioned opposite one another on the end side in the direction of the longitudinal axis (5), **characterized in that**
1.7 at least one second bearing face (14) is formed by way of an annular disc (15) which is screwed on the second shaft element (7) or the intermediate sleeve (8) on the end side, on that side of the annular disc (15) which faces the end side.

2. Joint shaft according to Claim 1, **characterized in that** a plurality of or all second bearing faces (14) are formed by way of in each case one annular disc (15) which is screwed on the second shaft element (7) or the intermediate sleeve (8) on the end side, on that side of the annular disc (15) which faces the end side.

3. Joint shaft according to Claim 1 or 2, **characterized in that** a first axial stop comprises a first bearing face (13) on the first shaft element (6) and a second bearing face (14) on the outermost intermediate sleeve (8) in the case of the provision of a plurality of intermediate sleeves (8), the first and the second bearing face (13, 14) being positioned opposite one another on the end side in the direction of the longitudinal axis (5), and a second axial stop comprises on the innermost intermediate sleeve (8) in the case of the provision of a plurality of intermediate sleeves (8) and a second bearing face (14) on the second shaft element (7), the first and the second bearing face (13, 14) being positioned opposite one another on the end side in the direction of the longitudinal axis (5).

4. Joint shaft according to Claim 1, **characterized in that** the first and the second bearing faces (13, 14) in each case have an annular shape.

5. Joint shaft according to one of Claims 1 to 4, **characterized in that** a plurality of or all second bearing faces (14) are formed by way of in each case one annular disc (15) which is screwed on the second shaft element (7) or the intermediate sleeve (8) on the end side, on that side of the annular disc (15) which faces the end side.

6. Joint shaft according to one of Claims 1 to 5, **characterized in that** at least one first bearing face (13), a plurality of or all first bearing faces (13) is/are formed by way of a radially inwardly projecting collar on the intermediate sleeve (8) or the first shaft element (6).

7. Joint shaft according to one of Claims 1 to 6, **characterized in that** the axial stops are positioned in such a way that an extension of the second shaft element (7) out of the intermediate sleeve (8) which encloses it directly and of the intermediate sleeve (8) which is enclosed directly by the first shaft element (6) out of the first shaft element (6) is limited to at most half its axial length or less.

8. Joint shaft according to one of Claims 1 to 7, **characterized in that** a stop (18) is provided in the centre part (4) or the end part (22), which stop (18) bears against the intermediate sleeve (8) on the end side during the retraction of the second shaft element (7), in order to drive said intermediate sleeve (8).

9. Joint shaft according to one of Claims 1 to 8, **characterized in that** a stopping stop is provided in the centre part (4) or the end part (22), against which stopping stop the intermediate sleeve (8) bears on the end side during the retraction into the first shaft element (6).

10. Joint shaft according to one of Claims 1 to 9, **characterized in that** a collar which forms the second bearing face (14) on the second shaft element (7) and a collar which forms the second bearing face (14) on the intermediate sleeve (8) configures the annular disc (15), and a collar which forms the first bearing face (13) on the intermediate sleeve (8) and the first bearing face (13) on the first shaft element (6) at the same time configures a radial guide (20) and/or centring means.

## Revendications

1. Arbre de transmission, en particulier arbre de transmission à joint de cardan, l'arbre de transmission comprenant
1.1 une première extrémité de raccordement axiale (1) et une deuxième extrémité de raccordement axiale (2) ;
1.2 une partie médiane (4) qui relie la première extrémité de raccordement (1) solidairement en rotation et de manière articulée à la deuxième extrémité de raccordement (2) par le biais d'au moins un joint rotatif (3) ou au moins un joint rotatif (3) par extrémité de raccordement (1, 2) ;
1.3 la partie médiane (4) et/ou une partie d'extrémité (22) étant munies, entre la partie médiane (4) et l'une des deux extrémités de raccordement (1, 2), d'une compensation de longueur par le biais d'un axe longitudinal (5) de l'arbre de transmission, comprenant un premier élément d'arbre tubulaire (6), qui comporte au moins une denture intérieure (9) pourvue de dents intérieures réparties circonférentiellement et s'étendant en direction de l'axe longitudinal (5) et qui est raccordé au moins indirectement à la première extrémité de raccordement (1), et un deuxième élément d'arbre (7) en forme de barre ou de tube qui comporte au moins une denture extérieure (12) pourvue de dents extérieures réparties circonférentiellement et s'étendant en direction de l'axe longitudinal (5) et qui est raccordé au moins indirectement à la deuxième extrémité de raccordement (2) ;
1.4 au moins un manchon intermédiaire (8) étant prévu entre le premier élément d'arbre (6) et le deuxième élément d'arbre (7), lequel manchon intermédiaire comporte au moins une denture de manchon intermédiaire intérieure (10), pourvue de dents intérieures réparties circonférentiellement et s'étendant en direction de l'axe longitudinal (5), et au moins une denture de manchon intermédiaire extérieure (11), pourvue de dents extérieures réparties circonférentiellement et s'étendant en direction de l'axe longitudinal (5), et peut coulisser en direction de l'axe longitudinal (5) par rapport au premier élément d'arbre (6) et au deuxième élément d'arbre (7) et est raccordé solidairement en rotation au premier élément d'arbre (6) par le biais de la denture de manchon intermédiaire extérieure (10) et directement ou indirectement au deuxième élément d'arbre (7) par le biais de la denture de manchon intermédiaire intérieure (11),
1.5 une pluralité de butées axiales sont prévues dans la partie médiane (4) ou la partie d'extrémité (22), lesquelles limitent un déploiement axial du deuxième élément d'arbre (7) de l'au moins un manchon intermédiaire (8) et un déploiement axial de l'au moins un manchon intermédiaire (8) du premier élément d'arbre (6),
1.6 une première butée axiale comprenant une première surface d'appui (13) au niveau du premier élément d'arbre (6) et une deuxième surface d'appui (14) au niveau du manchon intermédiaire (8), les première et deuxième surfaces d'appui (13, 14) étant positionnées à l'opposé l'une de l'autre du côté extrémité en direction de l'axe longitudinal (5), et une deuxième butée axiale comprenant une première surface d'appui (13) au niveau du manchon intermédiaire (8) et une deuxième surface d'appui (14) au niveau du deuxième élément d'arbre (7), les première et deuxième surfaces d'appui (13, 14) étant positionnées à l'opposé l'une de l'autre du côté extrémité en direction de l'axe longitudinal (5),
**caractérisé en ce que**
1.7 au moins une deuxième surface d'appui (14) est formée par un disque annulaire (15) vissé du côté extrémité au deuxième élément d'arbre (7) ou au manchon intermédiaire (8) sur le côté du disque annulaire (15) tourné vers le côté d'extrémité.

2. Arbre de transmission selon la revendication 1, **caractérisé en ce que** plusieurs deuxièmes surfaces d'appui (14) ou la totalité de celles-ci sont formées par un disque annulaire (15) vissé du côté extrémité au deuxième élément d'arbre (7) ou au manchon intermédiaire (8) sur le côté du disque annulaire (15) tourné vers le côté d'extrémité.

3. Arbre de transmission selon la revendication 1 ou 2, **caractérisé en ce qu'**une première butée axiale comprend une première surface d'appui (13) au niveau du premier élément d'arbre (6) et une deuxième surface d'appui (14) au niveau du manchon intermédiaire le plus extérieur (8) lorsqu'il est prévu une pluralité de manchons intermédiaires (8), les première et deuxième surfaces d'appui (13, 14) étant positionnées à l'opposé l'une de l'autre du côté extrémité en direction de l'axe longitudinal (5), et une deuxième butée axiale comprend au niveau du manchon intermédiaire le plus intérieur (8) lorsqu'il est prévu une pluralité de manchons intermédiaires (8) et une deuxième surface d'appui (14) au niveau du deuxième élément d'arbre (7), les première et deuxième surfaces d'appui (13, 14) étant positionnées à l'opposé l'une de l'autre du côté extrémité en direction de l'axe longitudinal (5).

4. Arbre de transmission selon la revendication 1, **caractérisé en ce que** les première et deuxième surfaces d'appui (13, 14) ont chacune une forme annulaire.

5. Arbre de transmission selon l'une des revendications 1 à 4, **caractérisé en ce que** plusieurs deuxièmes surfaces d'appui (14) ou la totalité de celles-ci sont formées par un disque annulaire (15) vissé du côté extrémité au deuxième élément d'arbre (7) ou au manchon intermédiaire (8) sur le côté du disque annulaire (15) tourné vers le côté d'extrémité.

6. Arbre de transmission selon l'une des revendications 1 à 5, **caractérisé en ce qu'**au moins une première surface d'appui (13), plusieurs premières surfaces d'appui (13) ou la totalité de celles-ci sont formées par une collerette, saillant radialement vers l'intérieur, sur le manchon intermédiaire (8) ou le premier élément d'arbre (6).

7. Arbre de transmission selon l'une des revendications 1 à 6, **caractérisé en ce que** les butées axiales sont positionnées de manière à limiter le déploiement du deuxième élément d'arbre (7) du manchon intermédiaire (8) entourant immédiatement celui-ci et le déploiement du manchon intermédiaire (8), entouré directement par le premier élément d'arbre (6), du premier élément d'arbre (6) au maximum à la moitié de leur longueur axiale ou moins.

8. Arbre de transmission selon l'une des revendications 1 à 7, **caractérisé en ce qu'**une butée (18) est prévue dans la partie médiane (4) ou la partie d'extrémité (22), laquelle butée vient buter, lors de l'escamotage du deuxième élément d'arbre (7), du côté extrémité sur le manchon intermédiaire (8) pour entraîner celui-ci.

9. Arbre de transmission selon l'une des revendications 1 à 8, **caractérisé en ce qu'**une butée d'arrêt est prévue dans la partie médiane (4) ou la partie d'extrémité (22), butée d'arrêt sur laquelle le manchon intermédiaire (8) vient buter du côté extrémité lors de l'escamotage dans le premier élément d'arbre (6) .

10. Arbre de transmission selon l'une des revendications 1 à 9, **caractérisé en ce que** la deuxième surface d'appui (14) au niveau du deuxième élément d'arbre (7) et la deuxième surface d'appui (14) au niveau du manchon intermédiaire (8) forment le disque annulaire (15) et une collerette formant la première surface d'appui (13) au niveau du manchon intermédiaire (8) et la première surface d'appui (13) au niveau du premier élément d'arbre (6), forment en même temps un moyen de guidage radial (20) et/ou un moyen de centrage.
